Europäisches Patentamt

European Patent Office

Office européen des brevets

(19)

(11) EP 1 308 696 A2

(12) **EUROPÄISCHE PATENTANMELDUNG**

(43) Veröffentlichungstag:
07.05.2003 Patentblatt 2003/19

(51) Int Cl.7: **G01D 3/02**

(21) Anmeldenummer: 02022739.3

(22) Anmeldetag: **11.10.2002**

(84) Benannte Vertragsstaaten:
**AT BE BG CH CY CZ DE DK EE ES FI FR GB GR IE IT LI LU MC NL PT SE SK TR**
Benannte Erstreckungsstaaten:
**AL LT LV MK RO SI**

(30) Priorität: **03.11.2001 DE 10154154**

(71) Anmelder: **ROBERT BOSCH GMBH**
**70442 Stuttgart (DE)**

(72) Erfinder:
• **Steinlechner, Siegbert**
**71229 Leonberg (DE)**

• **Ullmann, Steffen**
**70186 Stuttgart (DE)**
• **Fauter, Gerald**
**71229 Leonberg (DE)**
• **Huttenlocher, Joerg**
**71277 Rutesheim (DE)**
• **Wenzler, Axel**
**70569 Stuttgart (DE)**
• **Kittel, Hartmut**
**71287 Weissach-Flacht (DE)**

(54) **Winkelmesser mit Offset-Kompensation sowie Verfahren zur Kompensation der Offset-Drift eines Winkelmessers**

(57) Die Erfindung betrifft ein Verfahren zur Kompensation einer Offset-Drift eines Winkelsensors sowie einen Winkelsensor mit Offset-Kompensation, der einen zu messenden Winkel auf der Grundlage eines entsprechenden sin-Signals und cos-Signals bestimmt. Ein besonders einfaches Verfahren zur Offset-Kompensation besteht darin, zunächst die Amplitude (A) des cos- und/oder sin-Signals zu ermitteln und den zugehörigen Offsetwert auf der Grundlage des ermittelten Amplitudenwertes (A) zu bestimmen. Damit können die vom Winkelmesser erzeugten sin- und cos-Signale und somit der Winkel-Meßwert korrigiert werden.

Fig. 2

EP 1 308 696 A2

Printed by Jouve, 75001 PARIS (FR)

**Beschreibung**

Stand der Technik

Die Erfindung betrifft einen Winkelmesser mit Offset-Kompensation sowie ein Verfahren zur Kompensation der Offset-Drift eines Winkelmessers gemäß dem Oberbegriff des Patentanspruchs 1 bzw. 9.

Zur Messung mechanischer Winkel werden häufig Winkelsensoren eingesetzt, die den zu messenden Winkeln auf der Grundlage eines intern erzeugten sin- und cos-Signals bestimmen. Gattungsgemäße Winkelsensoren sind z.B. Resolver als induktive Geber, AMR-Sensoren (AMR: Anisotropic Magneto Resistive), GMR-Sensoren (GMR: Giant Magneto Resistive), Hallsensoren sowie optische oder mikromechanische Geber.

AMR-Sensoren werden beispielsweise zur Lenkwinkelmessung in Kfz eingesetzt. Der zu messende Winkel wird dabei über eine elektronische Auswertung der zugehörigen sin- und cos-Signale des Sensors bestimmt.

Die im Winkelmesser intern erzeugten sin- und cos-Signale weisen jedoch in der Regel einen Offset auf, der beispielsweise in Abhängigkeit von der Temperatur driften kann. Beispielsweise führt eine Winkelmessung im Motorraum eines Kfz, in welchem typischerweise hohe Temperaturen herrschen, zu nicht mehr vernachlässigbaren Meßabweichungen auf Grund von Offseteffekten. Bei zunehmend hohen Anforderungen an die Genauigkeit von Winkelsensoren besteht daher die Notwendigkeit, eine Offset-Kompensation durchzuführen.

Aus der DE-P10052609.8 ist ein Verfahren zur Offset-Kompensation für Winkelmesser in Abhängigkeit von der Temperatur beschrieben. Hierbei werden während der Fertigung des Sensors (AMR-Element mit Auswerteelektronik) die Offsetwerte des AMR-Elements bei definierten Temperaturen gemessen und in Form einer Tabelle oder einer mathematischen Funktion f(T) im Sensor abgelegt. Während des Betriebs des Winkelmessers ist eine Temperaturmessung erforderlich, auf Grund derer die tabellarisch abgelegten Offsetwerte ausgelesen bzw. die Offsetwerte anhand der hinterlegten mathematischen Funktion berechnet werden. Die Temperaturmessung kann beispielsweise mit Hilfe eines temperaturabhängigen Widerstandes (Temperatursensor) durchgeführt werden.

Die so durchgeführte Temperaturmessung erfordert jedoch einen beträchtlichen Hardware-Aufwand. Dieser umfaßt einen temperaturabhängigen Widerstand, der von einer Quelle gespeist werden muß, eine Anordnung zur Messung von Spannung oder Strom und einen AD-Wandler. Weitere Nachteile einer solchen Anordnung sind ein nicht exakt bekannter Temperaturgang des Temperatursensors (Widerstand) sowie die in der Regel nicht zu vermeidende räumliche Trennung von AMR-Element und Temperatursensor, wodurch unterschiedliche Temperaturen gemessen werden.

Es ist daher die Aufgabe der vorliegenden Erfindung, ein wesentlich einfacheres Verfahren zur Offset-Kompensation eines Winkelsensors, sowie einen entsprechenden Winkelsensor mit Offset-Kompensation zu schaffen.

Gelöst wird diese Aufgabe durch die im Patentanspruch 1 sowie im Patentanspruch 9 angegebenen Merkmale. Weitere Ausgestaltungen der Erfindung sind Gegenstand von Unteransprüchen.

Vorteile der Erfindung

Der wesentliche Gedanke der Erfindung besteht darin, einen direkten Zusammenhang zwischen der Amplitude des sin- oder cos-Signals und dem Offset auszunutzen, ohne den Umweg über eine explizite Temperaturbestimmung zu gehen.

Es wird daher vorgeschlagen, den Amplitudenwert des cos-und/oder sin-Signals zu ermitteln, einen zugehörigen Offsetwert allein auf der Grundlage des Amplitudenwertes zu bestimmen und schließlich den Winkel-Meßwert unter Berücksichtigung des ermittelten Offsetwertes zu bestimmen.

Wie sich in Testreihen gezeigt hat, weist die Amplitude des cos- bzw. sin-Signals einen nahezu linearen Temperaturgang auf und kann somit zur Bestimmung der temperaturabhängigen Offsetwerte verwendet werden. Zur Ermittlung der Amplitudensowie der zugehörigen Offsetwerte wird der Temperaturgang eines Winkelmessers beispielsweise in Prüffeldmessungen gemessen.

Die Offsetwerte des Winkelmessers werden vorzugsweise bei wenigstens zwei Temperaturwerten, vorzugsweise einer oberen und einer unteren Betriebstemperatur, bestimmt. Offsetzwischenwerte können beispielsweise durch Interpolation bestimmt werden.

Die Amplituden- und Offsetwerte können beispielsweise in einer Tabelle hinterlegt werden, aus der sie bei Bedarf ausgelesen werden. Wahlweise kann der Zusammenhang zwischen Amplitude und Offset auch durch eine mathematische Funktion beschrieben werden, mittels der der zugehörige Offsetwert nach dem Ermitteln der Signalamplitude berechnet wird.

Die mathematische Funktion kann z.B. erzeugt werden, indem der Winkelmesser auf verschiedene Temperaturwerte aufgeheizt, die Offsetwerte bestimmt und eine Näherungsfunktion berechnet wird.

Sinnvollerweise werden die Offsetwerte in dem bei Betrieb des Winkelsensors zu erwartenden Temperaturbereich aufgenommen, bei einem Kraftfahrzeug ist dies üblicherweise ein Temperaturbereich von -50°C bis +150°C.

Vorzugsweise wird auch der Offsetwert bei einer vorgegebenen Temperatur, insbesondere der Raumtemperatur, aufgenommen, um einen sogenannten "Grundoffset" zu erhalten. Dieser Grundoffset wird vorzugsweise direkt vom Eingangssignal (sin/cos-Signal) abgezogen und nur der relativ zum Grundoffset veränderliche Offset berechnet bzw. ausgelesen.

Gemäß einer bevorzugten Ausführungsform der Erfindung wird der zu messende Winkel mittels eines Cordic-Algorithmus berechnet.

Die wesentlichen Vorteile der Erfindung sind insbesondere der wesentlich geringere Hard- und Softwareaufwand zur Kompensation des Offset-Temperaturgangs gegenüber bekannten Anordnungen. Insbesondere ist kein temperaturabhängiger Widerstand und keine zusätzliche AD-Wandlung erforderlich. Dadurch ergibt sich eine signifikante Kosteneinsparung, insbesondere bei einer Realisierung der Auswerteelektronik in einem ASIC. Gleichzeitig erhöht sich die Genauigkeit des Winkelmessers beträchtlich.

Die Erfindung wird nachstehend anhand der beigefügten Zeichnungen beispielhaft näher erläutert. Es zeigen:

> Figur 1 einen Amplituden-Temperaturgang des sin-Signals eines Winkelmessers; und
> Figur 2 eine schematische Darstellung einer Anordnung zur Kompensation des Offset-Temperaturgangs.

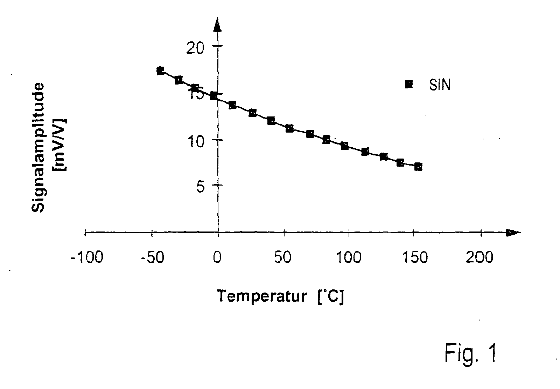

Figur 1 zeigt einen typischen Amplituden-Temperaturgang eines Winkelmessers in einem Temperaturintervall zwischen -50°C und +150°C. Wie zu erkennen ist, ist der Amplituden-Temperaturgang nahezu linear. Der Temperaturkoeffizient ist dabei im interessierenden Temperaturbereich näherungsweise konstant.

Diese Eigenschaft erlaubt eine direkte Zuordnung der Offset-Korrekturwerte $x_0$, $y_0$ zu einer vorliegenden Amplitude A ohne Messung der Temperatur.

$$x_0 = f(A), \qquad y_0 = f(A)$$

Diese Zuordnung kann entweder in Form einer Tabelle oder einer mathematischen Funktion erfolgen.

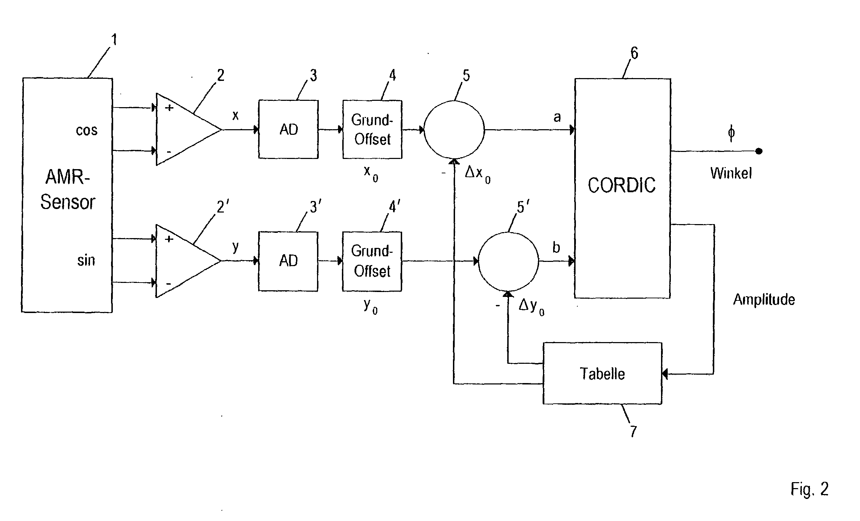

Figur 2 zeigt den schematischen Aufbau einer Schaltung für die Signalauswertung und Kompensation des Offset-Temperaturgangs. Dabei liefert ein AMR-Sensor 1 die beiden Signale x und y, die jeweils aus einem Offset $X_0$ bzw. $Y_0$ und einem sin- bzw. cos-förmigen Anteil bestehen, mit:

$$x = X_0 + A \cdot \cos(2 \cdot \varphi)$$

$$y = Y_0 + A \cdot \sin(2 \cdot \varphi)$$

Die beiden Offsetwerte $X_0$ und $Y_0$ lassen sich ihrerseits wiederum in zwei Anteile aufteilen: Einen sogenannten Grundoffset $x_0$ bzw. $y_0$, der dem Offsetwert bei einer festen Temperatur, z.B. bei Raumtemperatur entspricht, und einen wesentlich kleineren Offsetkorrekturwert $x_0$ bzw. $y_0$, der von der Temperatur abhängig ist, wobei gilt:

$$X_0 = x_0 + x_0$$

$$Y_0 = y_0 + y_0$$

In der Schaltung von Figur 2 werden die vom AMR-Sensorelement 1 erzeugten Signale zunächst Verstärkern 2,2' zugeführt und mittels AD-Wandlern 3,3' AD-gewandelt.

Von den digitalen Signalen wird zunächst der Grundoffset $x_0, y_0$ (Funktionsblöcke 4,4') und dann die Offset-Korrekturwerte $x_0$ bzw. $y_0$ (bei 5,5') abgezogen. Danach liegen vom Offset befreite, rein sin- bzw. cos-förmige, vom zu bestimmenden Winkel abhängige Signale

$$a = A \cdot \cos(2 \varphi)$$

$$b = A \cdot \sin(2 \cdot \varphi)$$

vor. Diese werden vorzugsweise mit Hilfe eines Cordic-Algorithmus in einer Auswerteeinheit 6 ausgewertet. Als Ergebnis liefert dieser Algorithmus das Argument (den Winkel φ) und die (mit einem konstanten Faktor k) multiplizierte Länge des komplexen Zeigers

$$z = a + jb = A \cdot (\cos(2 \cdot \varphi) + j \cdot \sin(2 \varphi))$$

Als Ausgangssignale der Auswerteeinheit 6 liegen somit der zu messende Winkel (bei AMR-Sensoren mit dem Faktor zwei multipliziert) und die (mit dem Faktor k multiplizierte) Amplitude A vor.

Zur Kompensation des Offset-Temperaturgangs und somit zur Korrektur des Meßwinkels kann beispielsweise das nachfolgend beschriebene Verfahren befolgt werden:

In einem ersten Schritt sollten die Offsetwerte und die zugehörigen, z.B. vom Cordic-Algorithmus berechneten Amplitudenwerte A in Prüffeldmessungen bei zwei oder mehr Temperaturen ermittelt werden. Vorteilhafte Temperaturwerte sind die maximale und die minimale Betriebstemperatur sowie die Raumtemperatur. Der Offset bei Raumtemperatur wird als Grundoffset gespeichert.

In einem zweiten Schritt wird dann eine Wertetabelle 7 (z.B. durch Interpolation der aufgenommenen Werte) oder eine mathematische Funktion (z.B. in einem Prüfrechner oder mittels eines speziellen Programms in der Auswerteeinheit 6) erzeugt. Der tabellarische oder funktionelle Zusammenhang zwischen der Signalamplitude A und den Offsetwerten $x_0, y_0$ bzw. den Offset-Korrekturwerten $x_0$, $y_0$ wird schließlich in einem Speicher z.B. im Winkelmesser gespeichert.

Während des Betriebs des Winkelmessers ändert sich die Amplitude A bzw. die Länge des Cordic-Zeigers z über der Temperatur. Aus der Amplitude läßt sich somit ein Zeiger auf den entsprechenden Offset-Korrekturwert $x_0$ bzw. $y_0$ in der Tabelle 7 bestimmen. Wurde der Ofrset-Korrekturwert $x_0$ bzw. $y_0$ in Form einer mathematischen Funktion gespeichert, so dient der Amplitudenwert A als Interpolationspunkt zur Bestimmung des zugehörigen Offset-Korrekturwertes $x_0$ bzw. $y_0$.

Die so ermittelten Offset-Korrekturwerte $x_0$ bzw. $y_0$ werden vom sin- bzw. cos-Signal abgezogen. Mit den offsetfreien Signalen kann nun die Winkelstellung exakt berechnet werden.

Bezugszeichenliste

| | |
|---|---|
| 1 | AMR-Sensor |
| 2,2' | Verstärker |
| 3,3' | AD-Wandler |
| 4,4' | Grund-Offset |
| 5,5' | Abzug der Werte |
| 6 | Auswerteeinheit |
| 7 | Tabelle |

**Patentansprüche**

1. Verfahren zur Kompensation der Offset-Drift eines Winkelsensors, der einen zu messenden Winkel auf der Grundlage eines entsprechenden sin- und cos-Signals bestimmt, **gekennzeichnet durch** folgende Schritte:

   - Ermitteln der Amplitude des cos- und/oder sin-Signals;
   - Ermitteln eines zugehörigen Offsetwertes auf der Grundlage des Amplitudenwertes; und
   - Ermitteln eines Winkel-Meßwertes unter Berücksichtigung des ermittelten Offsetwertes.

2. Verfahren nach Anspruch 1, **dadurch gekennzeichnet, dass** der zum Amplitudenwert gehörige Offsetwert aus einer Tabelle ausgelesen wird.

3. Verfahren nach Anspruch 1, **dadurch gekennzeichnet, dass** der zum Amplitudenwert gehörige Offsetwert anhand einer Formel berechnet wird.

4. Verfahren nach einem der vorhergehenden Ansprüche, **dadurch gekennzeichnet, dass** die Relation zwischen Amplituden- und Offsetwerten in Abhängigkeit von der Temperatur anhand von Prüffeldmessungen gemessen und im Winkelsensor hinterlegt wird.

5. Verfahren nach Anspruch 4, **dadurch gekennzeichnet, dass** die Offsetwerte des Winkelsensors bei wenigstens zwei Temperaturwerten bestimmt und Zwischenwerte für den Offset durch Interpolation bestimmt werden.

6. Verfahren nach Anspruch 5, **dadurch gekennzeichnet, dass** als Temperaturwerte wenigstens ein maximaler und ein minimaler Betriebstemperaturwert verwendet werden.

7. Verfahren nach einem der vorhergehenden Ansprüche, **dadurch gekennzeichnet, dass** die Amplitudenwerte mittels eines CORDIC-Algorithmus berechnet werden.

8. Verfahren nach einem der vorhergehenden Ansprüche, **dadurch gekennzeichnet, dass** vom cos- bzw. sin-Signal ein konstanter Grund-Offsetwert $x_0, y_0$ sowie ein temperaturabhängiger Offset-Korrekturwert ($\Delta x_0$ bzw. $\Delta y_0$) subtrahiert wird.

9. Winkelsensor, insbesondere AMR-Winkelsensor, mit einem Sensorelement, das abhängig vom eingestellten Drehwinkel ein sin-Signal und ein cos-Signal an eine Auswerteeinheit (6) ausgibt, **dadurch gekennzeichnet, dass** die Auswerteeinheit (6) einen Algorithmus zur Ermittlung der Amplitude des sinund/oder cos-Signals aufweist und in der Lage ist, den zum ermittelten Amplitudenwert gehörigen Offsetwert zu bestimmen.

10. Winkelsensor nach Anspruch 9, **dadurch gekennzeichnet, dass** die Auswerteeinheit (6) den zugehörigen Offsetwert aus einer Tabelle (7) ausliest.

11. Winkelsensor nach Anspruch 9, **dadurch gekennzeichnet, dass** die Auswerteeinheit (6) den zugehörigen Offsetwert anhand einer Formel berechnet.

12. Winkelsensor nach Anspruch 9, **dadurch gekennzeichnet, dass** die Auswerteeinheit (6) den zu messenden Winkel mittels eines Cordic-Algorithmus berechnet.

Fig. 1

Fig. 2

EP 1 308 696 A2